**Europäisches Patentamt**

**European Patent Office**

**Office européen des brevets**

(11) Veröffentlichungsnummer: **0 129 011**

**A2**

(12) # EUROPÄISCHE PATENTANMELDUNG

(21) Anmeldenummer: **84103931.6**

(51) Int. Cl.³: **B 01 D 46/34**
**B 01 D 53/08**

(22) Anmeldetag: **09.04.84**

(30) Priorität: **17.05.83 DE 3317906**

(43) Veröffentlichungstag der Anmeldung:
**27.12.84 Patentblatt 84/52**

(84) Benannte Vertragsstaaten:
**AT BE FR GB IT NL**

(71) Anmelder: **Hans Lingl Anlagenbau und**
**Verfahrenstechnik GmbH & Co. KG**
**Albrecht-Berblinger-Strasse 6**
**D-7910 Neu-Ulm(DE)**

(72) Erfinder: **Lingl, Hans**
**An der Schiessmauer 46**
**D-7910 Neu-Ulm(DE)**

(54) **Vorrichtung zum Reinigen von Rauchgasen.**

(57) Die Vorrichtung zum Renigen von Rauchgasen besteht aus einem Leitvorrichtungen aufweisenden hülsenförmigen Granulatfilter und einem diesen umschließenden Filtergehäuse mit Rauchgaseinlaß unten und Reingasauslaß oben. Das Rauchgas wird in den durch den hülsenförmigen Filter gebildeten Innenraum des Gehäuses eingeleitet und durch das Filter hindurch in den den Filter umgebenden Außenraum des Gehäuses gedrückt, aus dem es als Reingas abgeführt wird. Die Leitvorrichtungen des Granulatfilters bestehen aus übereinander angeordneten äußeren konisch nach innen geneigten Ringen, aus übereinander angeordneten inneren, konisch nach außen geneigten Ringen und dem Granulat, das im Ringspalt zwischen diesen Ringen nach unten strömt. Die Breite der äußeren und inneren Ringe sowie der Abstand zwischen diesen ist derart, daß das mit einem bestimmten Böschungswinkel fließende Granulat nicht überläuft.

Fig. 1

## Vorrichtung zum Reinigen von Rauchgasen

Die Erfindung betrifft eine Vorrichtung zum Reinigen von Rauchgasen, die unten in ein Filtergehäuse eingeführt, in einen vom Filtergehäuse umschlossenen, durch einen hülsenförmigen Granulatfilter gebildeten Innenraum geleitet und durch den Granulatfilter hindurch in einen diesen umgebenden Außenraum des Filtergehäuses gedrückt werden, aus dem das Reingas oben abgeführt wird, wobei das Filtergranulat durch ringförmige Leitvorrichtungen gehalten wird und eine innenliegende rotierende Abstreifeinrichtung vorgesehen ist, über die das verbrauchte Granulat einem Sammelbehälter zugeleitet wird.

Derartige Vorrichtungen sind erforderlich zum Reinigen der Rauchgase von festen oder gasförmigen Schadstoffen, zum Beispiel von Ruß oder bei Verwendung von Kalksteingranulat auch von Fluor-Wasserstoffen durch Trockensorption.

Aus der ceramic forum international/Berichte der DKG, Band 58, von 1981, Nr. 6 "Fluor-Trockensorption im GSS-Sorptionsfilter" von B. Rüskamp ist ein Filter mit Kalksteingranulatfüllung bekannt, der hülsenförmig ausgebildet ist, wobei die Hülse aus mehreren Schichtringen besteht, die voneinander getrennt sind und in die das fluorbeladene Rauchgas radial eintritt, innerhalb der Ringe nahezu vertikal umgelenkt wird, und die Filterschicht gereinigt den außenliegenden Reingasraum verläßt.

Zwischen dem radialen Gaseintritt in die Schüttschichtringe und dem nahezu vertikalen Austritt soll die Geschwindigkeit der Abgase in der Schüttschicht verringert werden, um auf diese Weise die Verweilzeit innerhalb der Filterschicht zu erhöhen.

Das Filtermaterial wird über einen Verteilkonus am oberen Ende der Filterzelle durch Verteilrohre in die einzelnen Schüttschichtringe eingebracht, in denen es radial nach innen fließt. Mit rotierenden Abstreifern wird der Überlauf des verbrauchten Filtermaterials in Fangtaschen, die in jeder Schüttschichtebene angeordnet sind, abgestreift und über einen Fallkanal einem Sammelkonus am unteren Ende des Filters zugeführt.

Hierbei ist nachteilig, daß die Konstruktion der Schichtringe sowie der Granulatzu- und -abführung aufwendig ist und die großen Metallflächen bei aggresiven Rauchgasen dem Säureangriff ausgesetzt sind. Die Umlenkung des Granulats in den Schichtringen, die dessen Ausfließen verhindert und auch die Umlenkung der Rauchgase bewirkt, resultiert in einer geringen Filtereinlaßfläche, so daß eine große Zahl von Schichtringen erforderlich ist und die Vorrichtung sehr groß wird.

Eine Geschwindigkeitsverringerung der Rauchgase in der Filterschicht wird bestenfalls gegenüber der Geschwindigkeit in der Einlaßöffnung erreicht. Eine nennenswerte Verringerung der Geschwindigkeit gegenüber dem Hülseninnenraum demgegenüber würde eine große Filterstärke oder ebenfalls eine große Zahl von Schichtringen erfordern.

Aufgabe der Erfindung ist es demnach, einen Filter zu schaffen, der mit möglichst wenig, den aggressiven Rauchgasen an der Rohgasseite des Filters ausgesetzten Metallflächen auskommt, bei dem keine Filterfläche durch Ringwandungen oder ähnliches verlorengeht, bei dem geringe Rauchgasgeschwindigkeiten bei relativ kleiner Baugröße in der Filterschicht erreicht werden, der einen geringen mechanischen Aufwand und geringe Antriebsleistung erfordert.

Die Aufgabe der Erfindung wird durch die im kennzeichnenden Teil des Anspruchs 1 beschriebenen Maßnahmen gelöst.

Die mit der Erfindung erzielbaren Vorteile bestehen insbesondere darin, daß der Filter relativ klein ist, eine große Filterfläche aufweist mit relativ wenig zum Rauchgas exponierte Metallflächen, wobei der mechanische und der Energieaufwand gering ist.

Vorteilhafte Ausgestaltungen der Erfindung sind in den Unteransprüchen enthalten.

Ein Ausführungsbeispiel der Erfindung ist in der Zeichnung dargestellt und wird im folgenden näher beschrieben. Es zeigen:

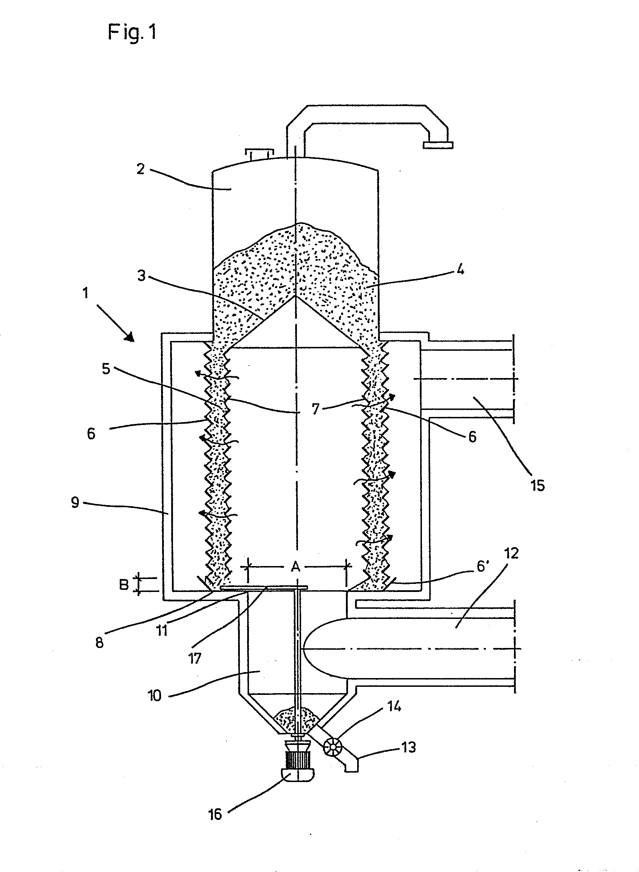

Fig. 1      einen Schnitt durch die Filteranlage,
Fig. 2      einen Detailschnitt des Filters.

Die Filteranlage 1 besteht aus einem über einem Filtergehäuse 9 angeordneten Silo 2 mit einem Verteilkonus 3 an dessen unteren Seite, mit dem das Granulat 4 ringförmig nach außen in den Granulatfilter 5 geleitet wird. Der innerhalb des Gehäuses 9 befindliche hülsenförmige Granulatfilter 5 besteht aus übereinander angeordneten äußeren Ringen 6, die konisch nach innen geneigt sind, übereinander angeordneten inneren Ringen 7, die nach außen konisch geneigt sind, und dem Granulat 4, das im Ringspalt zwischen den Ringen 6 und 7 nach unten strömt.

Der unterste äußere Ring 6' ist breiter als die darüberliegenden, so daß er als Fangvorrichtung für evtl. überlaufendes Granulat dient. Der unterste innere Ring 7 ist in einem Abstand B zum Boden 8 des Filtergehäuses 9 angeordnet, so daß das Granulat 4 unter diesem untersten Ring 7 nach innen abfließen kann.

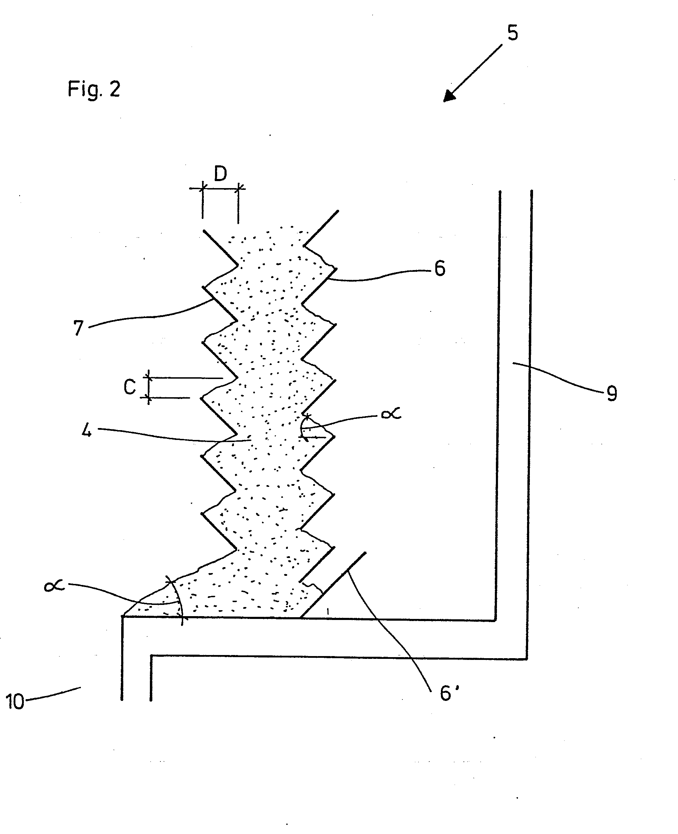

Die horizontale Breite C der Ringe 6 und 7 (Fig. 2) sowie der Abstand C zwischen den Ringen 6 und 7 ist so gewählt, daß bei Berücksichtigung eines Böschungswinkels $\alpha$ des Granulats 4 kein Überlauf stattfindet.

Am Boden 8 ist ein zylindrischer Fangraum 10 vorgesehen, der einen Durchmesser A hat, der in einem solchen Verhältnis zum Abstand B zwischen dem untersten inneren Ring 7 und dem Boden 8 steht, daß das Granulat 4 mit dem Böschungswinkel $\alpha$ nicht über die Kante 11 in den Fangraum 10 laufen kann, der gleichzeitig den Einlaß 12 für das verschmutzte Rauchgas aufweist.

Der Fangraum 10 hat einen nach unten verjüngten Abschnitt. An seiner Unterseite befindet sich seitlich ein Granulatablaß 13 mit Zellradschleuse 14 zum Ablassen des verbrauchten Granulats 4.

Das Reingas wird zwischen Granulatfilter 5 und dem Filtergehäuse 9 gesammelt und mit dem Leitungsanschluß 15 abgeführt.

Im Fangraum 10 ist eine Abstreifvorrichtung 17 gelagert, die programmiert innerhalb des äußeren untersten Ringes 6' rotiert und das verbrauchte Granulat 4 in den Fangraum 10 abstreift mit einem Antrieb 16, der im Boden des Fangraumes 10 gelagert ist. Das Granulat 4 läuft aus dem Silo 2 selbsttätig in den Granulatfilter 5 nach.

P a t e n t a n s p r ü c h e

1. Vorrichtung zum Reinigen von Rauchgasen, die unten in ein Filtergehäuse eingeführt, in einen vom Filtergehäuse umschlossenen, durch einen hülsenförmigen Granulatfilter gebildeten Innenraum eingeleitet und durch den Granulatfilter hindurch in einen diesen umgebenden Außenraum des Filtergehäuses gedrückt werden, aus dem das Reingas abgeführt wird, wobei das Filtergranulat durch ringförmige Leitvorrichtungen gehalten wird und eine innenliegende, rotierende Abstreifeinrichtung vorgesehen ist, über die das verbrauchte Granulat einem Sammelbehälter zugeleitet wird, dadurch gekennzeichnet,
daß der Granulatfilter (5) aus übereinander angeordneten äußeren Ringen (6) gebildet wird, die konisch nach innen geneigt sind und deren unterster Ring (6') breiter ist, um als Fangvorrichtung für überlaufendes Granulat (4) zu dienen, und aus inneren Ringen (7) besteht, die konisch nach außen geneigt sind, wobei deren unterster Ring im Abstand (B) zum Boden (8) des Filtergehäuses (9) angeordnet ist, so daß das Granulat (4) darunter in das Innere des Filtergehäuses (9) abfließen kann, und daß der vertikale Abstand (C) der Ringe (6) und (7) sowie die Ringbreite (D) derart sind, daß mit einem Böschungswinkel ($\alpha$) das fließende Granulat (4) nicht überläuft.

2. Vorrichtung nach Anspruch 1, dadurch gekennzeichnet, daß das Granulat (4) aus einem Silo (2) mit konischem Verteiler (3) dem Granulatfilter (5) durch Gravitation zugeführt wird.

3. Vorrichtung nach.Anspruch 1, dadurch gekennzeichnet, daß an den Boden (8) des Filtergehäuses (9) ein zylindrischer Fangraum (10) für das Granulat (4) anschließt, dessen Durchmesser (A) kleiner als der des Filters (5) und auf den durch den Abstand (B) des untersten inneren Ringes (7) zum Boden (8) vorgegebenen Böschungswinkel ($\alpha$) des austretenden Granulats abgestimmt ist.

4. Vorrichtung nach Anspruch 3, dadurch gekennzeichnet, daß der zugleich den Einlaß (12) des Rauchgases aufweisende Fangraum (10) in einem nach unten verjüngten Abschnitt, der seitlich den Granulatauslaß (13) mit Zellradschleuse aufweist, mündet.

5. Vorrichtung nach mindestens einem der Ansprüche 1 bis 4, dadurch gekennzeichnet, daß im FAngraum (10) die Abstreifeinrichtung gelagert ist, welche aus einem einzigen auf dem Boden (8) des Filtergehäuses unter dem untersten inneren Ring (7) und innerhalb des untersten äußeren Ringes (6') sich programmiert drehenden Abstreiforgan (17) besteht.

Fig. 1

Fig. 2